# EUROPÄISCHE PATENTANMELDUNG

(11) **EP 2 631 100 A2**
(43) Veröffentlichungstag der Anmeldung: **28.08.2013**
(21) Anmeldenummer: 13155611.0
(22) Anmeldetag: 18.02.2013
(51) Int. Cl.: B60J 5/06

(54) **Schiebetürvorrichtung mit schräger Führungsschiene**

(30) Priorität: 23.02.2012 DE 102012101477
(71) Anmelder: Gebr. Bode GmbH & Co. KG, 34123 Kassel (DE)
(72) Erfinder: Peter, Stefan, 34212 Melsungen (DE)
(74) Vertreter: Bauer Vorberg Kayser Patentanwälte

(57) **Zusammenfassung**

Die Erfindung bezieht sich auf eine Schiebetürvorrichtung (22), aufweisend
- eine entlang eines Verschiebeweges (26) in Verschieberichtung verschiebbare Schiebetür (24),
- eine erste Führungsschiene (38),
- eine zweite Führungsschiene (42), die in vertikaler Richtung beabstandet von der ersten Führungsschiene (38) angeordnet ist,
- ein erstes Verbindungsmittel (36), das mit der Schiebetür (24) verbunden und in der ersten Führungsschiene (38) verschiebbar geführt ist,
- ein zweites Verbindungsmittel (40), das mit der Schiebetür (24) verbunden und in der zweiten Führungsschiene (42) verschiebbar geführt ist.

Die Schiebetürvorrichtung (22) ist dadurch gekennzeichnet, dass die Führungsschienen (38, 42) in horizontaler Ebene derart schräg zueinander verlaufend angeordnet sind, dass sich die Schiebetür (24) ausgehend von einer Geschlossenstellung in Richtung einer Offenstellung zunehmend schräg zu einer Vertikalen (44) stellt.

## Beschreibung

Die Erfindung betrifft Schiebetürvorrichtung, aufweisend
- eine entlang eines Verschiebeweges verschiebbare Schiebetür,
- eine erste Führungsschiene,
- eine zweite Führungsschiene, die in vertikaler Richtung beabstandet von der ersten Führungsschiene angeordnet ist,
- ein erstes Verbindungsmittel, das mit der Schiebetür verbunden und in der ersten Führungsschiene verschiebbar geführt ist,
- ein zweites Verbindungsmittel, das mit der Schiebetür verbunden und in der zweiten Führungsschiene verschiebbar geführt ist.

Derartige Schiebetürvorrichtungen, sind insbesondere in der Fahrzeugtechnik an sich bekannt und werden oftmals bei Nutzfahrzeugen eingesetzt. Die Schiebetür wird bei diesen motorisch oder durch manuelles Schieben oder Ziehen des Türflügels bewegt. Die Schiebetür wird entlang ihres Verschiebeweges im Wesentlichen parallel zur Karosseriewand des Fahrzeugs außen verschoben.

Die Türöffnung ist in der Regel zwischen den Radachsen angeordnet. Wird die Schiebetür geöffnet und nach hinten verschoben, verdeckt sie insbesondere bei Fahrzeugen mit kurzem Radstand, von der Seite gesehen das Hinterrad des Fahrzeugs. Ein wesentliches Problem ergibt sich zum Beispiel dann, wenn das Hinterrad über die Karosseriewand des Fahrzeugs nach außen vorsteht. In diesem Fall, oder auch wenn andere Teile des Fahrzeugs in den Verschiebeweg der Schiebetür hineinragen, sind aufwändige und kostenintensive Halte-und Verschiebevorrichtungen für die Schiebetür notwendig.

Beispielsweise beschreibt die DE 10 2008 058 242 A1 eine Schiebetüranordnung, die ein Ausschwenken der Schiebetür ermöglicht, um an Hindernissen vorbeizukommen. Ermöglicht wird dies durch ein aufwändiges Gelenk in einem Kopplungsmittel zwischen der Schiebetür und einer Führungsschiene. Über dieses Gelenk kann die Tür bei der Bewegung nach hinten von der Karosseriewand weg geschwenkt werden.

Die Aufgabe der Erfindung besteht darin, eine möglichst einfache und kostengünstige Schiebetürvorrichtung, insbesondere für Fahrzeuge, zu schaffen, die ein Verschieben der Schiebetür im Wesentlichen parallel zu einer Karosseriewand auch dann ermöglicht, wenn Hindernisse in den Verschiebeweg der Schiebetür hineinragen. Insbesondere soll es möglich sein, die Fahrzeugschiebetürvorrichtung ohne erhebliche Anpassungen oder Umbauten in handelsübliche Fahrzeuge zu integrieren.

Erfindungsgemäß wird die Aufgabe durch eine Schiebetürvorrichtung mit den Merkmalen des Patentanspruchs 1 gelöst.

Demnach ist die diese **dadurch gekennzeichnet, dass** die Führungsschienen in horizontaler Ebene bzw. bezogen auf eine Querachse des Fahrzeugs derart schräg zueinander verlaufend angeordnet sind, dass sich die Schiebetür ausgehend von einer Geschlossenstellung in Richtung einer Offenstellung zunehmend schräg zu einer Vertikalen stellt.

Mit anderen Worten verläuft eine Führungsschiene in etwa parallel zur Karosserieaußenwand des Fahrzeugs bzw. parallel zu einer oberen oder unteren Schließkante der Schiebetür, die andere Führungsschiene verläuft dagegen schräg zur Karosserieaußenwand des Fahrzeugs bzw. der oberen oder unteren Schließkante der Schiebetür. Die obere und unter Schließkante meint jeweils diejenige Kante, die im Allgemeinen parallel zur Schließrichtung verläuft, wobei mit "unten" diejenige Schließkante gemeint ist, die, im Kraftfahrzeug eingebaut, näher der Fahrbahnoberfläche angeordnet ist.

Die erfindungsgemäße Schiebetür eignet sich insbesondere als Fahrzeugschiebtüren, die Idee ist aber auch für Fenster, Klappen oder ähnliches umsetzbar. Der Begriff Schiebtür beinhaltet im Sinne der Erfindung entsprechende Elemente.

Wird die Schiebetür geöffnet und verschoben, stellt sie sich also zunehmend schräg und wird im Bereich der zweiten Führungsschiene von der Karosseriewand entfernt, so dass ein Spalt bzw. Freiraum entsteht. Über den Grad der Schrägstellung der zweiten Führungsschiene ist der entstehende Freiraum beeinflussbar. Die Schiebetür schließt in der Offenstellung ausgehend von der ersten Führungsschiene erfindungsgemäß einen Winkel von 0,5° bis 10°, vorzugsweise 3 bis 5°, insbesondere 1,6° ein. Insbesondere ein Winkel unter 5° ist bei üblichen Lieferfahrzeugen, die in der Regel eine Höhe zwischen 1,8 m und 2,8 m aufweisen, bereits ausreichend, um die Schiebetür beispielsweise an einem seitlich vorstehenden Hinterrad vorbeizuführen. Ein Winkel von 1,2° bis 2°, insbesondere 1,6° hat sich als für diese Fahrzeuge als besonders geeignet erwiesen.

Die erste Führungsschiene kann in vertikaler Richtung grundsätzlich unterhalb oder oberhalb der zweiten Führungsschiene angeordnet sein, in einer besonders vorteilhaften Ausführungsvariante ist erste Führungsschiene aber in vertikaler Richtung oberhalb der zweiten, schräg stehenden Führungsschiene angeordnet. Die untere Schließkante der Schiebetür ist in der Offenstellung demnach von der Karosserieaußenwand beanstandet, während die obere Schließkante der Schiebetür über ihre gesamte Länge nahe an der Karosseriewand gehalten ist.

Erfindungsgemäß kann die obere erste Führungsschiene als U-Profil ausgebildet sein, in der die Schiebetür über das erste Verbindungsmittel und eine daran angeordnete Rolle hängend gelagert und geführt ist. Das U-Profil ist nach oben geöffnet angeordnet, die Radachse der Rolle verläuft quer zur Längsrichtung der ersten Führungsschiene. Die Rolle und das U-Profil sind derart aufeinander abgestimmt, dass ein Schwenken der Schiebetür quer zur Längsrichtung der ersten Führungsschiene bzw. aus der Vertikalen möglich ist. Die Verschwenkbarkeit der Schiebetür quer zur Längsrichtung der ersten Führungsschiene ist notwendig, da die Schiebetür aufgrund der schräg verlaufenden zweiten Führungsschiene über den Verschiebeweg zwangsweise aus der Vertikalen heraus geschwenkt wird und durch die erste bzw. oberer Führungsschiene nicht blockiert werden darf. Anstelle des U-Profils und der Rolle sind auch andere Möglichkeiten einer schwenkbaren Lagerung denkbar. Zum Beispiel können die Verbindungsmittel Gelenke aufweisen oder die Rollen können entsprechend schwenkbare Kugelgelenke aufweisen.

In einer besonders vorteilhaften Ausführungsvariante weist die Schiebetür je Führungsschiene mehrere Verbindungsmittel auf, die in Verschieberichtung der Schiebetür hintereinander angeordnet sind. Hierdurch wird erreicht, dass die Schiebetür besser und stabiler in der Karosserieaußenwand gehalten ist. Um ein Verwinden der Schiebetür zu verhindern, weisen die Verbindungsmittel vorzugsweise unterschiedliche Längen auf. Die Länge der Verbindungsmittel kann vorzugsweise derart gewählt werden, dass sie die Schrägstellung der zweiten Führungsschiene in Längsrichtung, also zum Beispiel gegenüber der Karosserieaußenwand des Fahrzeugs, entlang des Verschiebeweg ausgleichen. Dies bedeutet, dass die Schiebetür und somit auch deren obere und/oder untere Schließkanten unabhängig von ihrer Position stets parallel zur Karosserieaußenwand ausgerichtet ist. Durch die erfindungsgemäße Schrägstellung der zweiten Führungsschiene und die unterschiedlichen Längen der Verbindungsmittel wird die Schiebetür also während des Öffnungsvorgangs in Bezug auf die Vertikale zwar schräg gestellt, in Bezug auf eine Längsachse des Fahrzeugs, die in der Regel der Verschieberichtung entspricht, bleibt sie aber parallel ausgerichtet.

Bevorzugt ist die Schiebetür ausschließlich linear verschiebbar gelagert. Aufgrund des Fehlens von Schwenkgelenken ist die erfindungsgemäße Montageeinheit leicht und störunanfällig. Ferner sind die bei der geschlossenen Stellung des Türflügels verbleibenden Spalte zwischen Türflügel und Türrahmen gegen das Eindringen von Staub, Schmutz und Wasser vergleichsweise einfach abzudichten.

Die Erfindung eignet sich insbesondere für die Ausbildung als Montageeinheit, die auch einen entsprechenden Türrahmen aufweist und in einer Türöffnung einer Karosserieaußenwand eingesetzt werden kann. Die Montageeinheit weist alle notwendigen Bauteile auf, um ein Öffnen und Schließen der Schiebetür zu ermöglichen. Montageeinheit im Sinne der Erfindung meint, dass die Fahrzeugschiebetürvorrichtung ein gegenüber der Karosserie des Fahrzeugs separates, eigenständiges Bauteil ist. Somit ist seitens der Karosserie lediglich eine Öffnung vorzusehen, in der die erfindungsgemäße Montageeinheit einzusetzen ist. Dadurch, dass seitens der Karosserie keine konstruktiven Vorkehrungen und keine sonstige "Infrastruktur" zur Lagerung des Türflügels vorzusehen ist, sind die Montage und die Nachrüstung erleichtert. Aufgrund der dann tragenden Wirkung des Türrahmens ist die Montageanordnung in nahezu beliebige Aufbauten und weitgehend unabhängig von dessen Wandstärke zu integrieren.

Erfindungsgemäß weisen die Verbindungsmittel Rollen auf, die in den Führungsschienen abrollen. Durch die Rollen-Schienen-Lagerung ist einerseits eine Leichtgängigkeit der Türverschiebung, andererseits eine hohe Belastbarkeit der Lagerung sichergestellt. Die Rollen-Schienen-Lagerung im Sinne der Erfindung ist weit auszulegen und umfasst jeweils wenigstens eine Rolle und wenigstens eine Schiene, auf der wenigstens eine Rolle, durch die Schiene geführt, abrollt.

Die Schiebetür wird in einer Ausgestaltung motorisch bewegt, denkbar ist auch ein hydraulischer oder pneumatischer Antrieb. Gemäß einer bevorzugten Ausgestaltung erfolgt die Bewegung der Schiebetür durch manuelles Schieben oder Ziehen des Türflügels.

Im Folgenden wird anhand der beigefügten Zeichnungen ein Ausführungsbeispiel für eine Fahrzeugschiebetürvorrichtung nach der Erfindung näher erläutert. In den Zeichnungen zeigen:
Fig. 1: eine stark vereinfachte Darstellung eines Fahrzeugs in Seitenansicht mit einer Fahrzeugschiebetürvorrichtung,
Fig. 2: eine stark vereinfachte Darstellung der Fahrzeugschiebetürvorrichtung im Querschnitt,
Fig. 3: eine Prinzipskizze der Fahrzeugschiebetürvorrichtung in einem horizontalen Schnitt mit geschlossener Schiebetür,
Fig. 4: eine Prinzipskizze der Fahrzeugschiebetürvorrichtung in einem horizontalen Schnitt mit geöffneter Schiebetür.

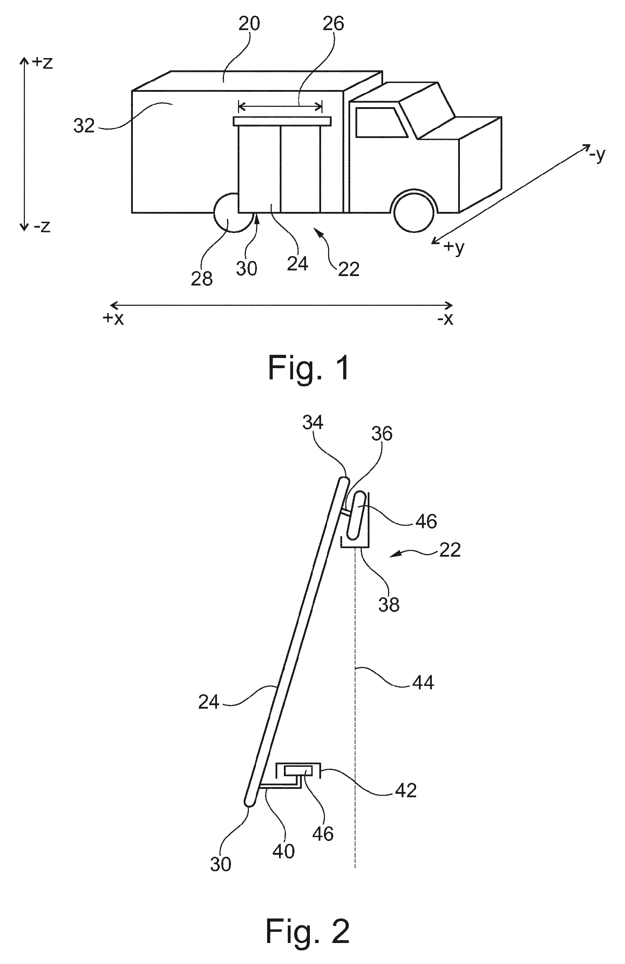

Figur 1 zeigt eine vereinfachte Darstellung eines Fahrzeugs 20 in Seitenansicht. In das Fahrzeug 20 ist eine Schiebetürvorrichtung 22 mit einer Schiebetür 24 eingebaut.

Das Fahrzeug weist eine X-Achse (Längsachse), eine Y-Achse (Querachse) und eine Z-Z (Hochachse) auf. Die Schiebetürvorrichtung 22 ist am gezeigten Ausführungsbeispiel derart eingesetzt, dass die Schiebetür 24 entlang der Längsachse X-X verschiebbar ist, ein Verschiebeweg 26 der Schiebetür 24 verläuft somit entlang der Längsachse X-X des Fahrzeugs.

Figur 1 zeigt ein Hinterrad 28, dass seitlich, also entlang der Querachse Y-Y, in den Verschiebeweg 26 Schiebetür 24 hineinragt. Um eine Kollision der Schiebetür 24 mit dem Hinterrad 28 zu vermeiden, wird die Schiebetür 24 beim Öffnen über den Verlauf des Verschiebewegs 26 derart ausgeschwenkt, dass sie mit einer unteren Schließkante 30 von einer Karosserieaußenwand 32 absteht und somit am Hinterrad 28 vorbeigeführt wird (vergleiche hierzu insbesondere auch Figur 2).

Figur 2 verdeutlicht, dass die Schiebetür 24 im gezeigten Ausführungsbeispiel im Bereich ihrer oberen Schließkante 34 über erste Verbindungsmittel 36 mit einer ersten Führungsschiene 38 verbunden bzw. in ihr hängend und entlang der Längsachse X-X verschiebbar gelagert ist. Über zweite Verbindungsmittel 40 ist die Schiebetür in einer zweiten Führungsschiene 42 geführt. Figur 2 zeigt die erfindungsgemäße Schiebetürvorrichtung 22 im Querschnitt und bei geöffneter Schiebetür 24. Erkennbar ist, dass die zweite Führungsschiene 42 in horizontaler Ebene, also entlang der Querachse Y-Y in diesem Bereich versetzt zu der ersten Führungsschiene 38 angeordnet ist und die Schiebetür 24 schräg zu einer Vertikalen 44 steht. Die Vertikale 44 ist üblicherweise lotrecht zum Untergrund ausgerichtet.

Im gezeigten Ausführungsbeispiel ist die erste Führungsschiene 38 als nach oben offenes U-Profil ausgebildet, in der eine Rolle 46, die mit dem ersten Verbindungsmittel 36 verbunden ist, läuft. Das U-Profil und die Rolle 46 sind derart aufeinander abgestimmt, dass ein Verschwenken der Schiebetür 24 gegenüber der Vertikalen 44 möglich ist. Obwohl zur Verdeutlichung des Prinzips ein relativ großer Verschwenkwinkel 50 dargestellt ist, kann es ausreichen, wenn die Schiebetür 24 in der Offenstellung ausgehend von der ersten Führungsschiene 38 einen Winkel von nur 0,5° bis 3°, vorzugsweise 1,6° mit der Vertikalen 44 einschließt. Der Winkelbereich ist aber nur beispielhaft zu verstehen, auch Winkel von 0,5° bis 10°, vorzugsweise 3 bis 5°, können, je nach Anwendungsfall, sinnvoll sein.

Auch das zweite Verbindungsmittel 40 ist über eine Rolle 46 in der zweiten Führungsschiene 42 geführt, wobei diese im gezeigten Ausführungsbeispiel um 90° verdreht zur oberen Rolle 46 ausgerichtet ist. Die Darstellung soll jedoch nur beispielhaft verstanden werden, insbesondere kann die Verbindung des zweiten Verbindungsmittels 40 mit der zweiten Führungsschiene 42 auf unterschiedlichste Weise realisiert werden. Die gezeigten Rollen 46 können zum Beispiel auch in der gleichen Ebene, also nicht um 90° verdreht zueinander angeordnet sein.

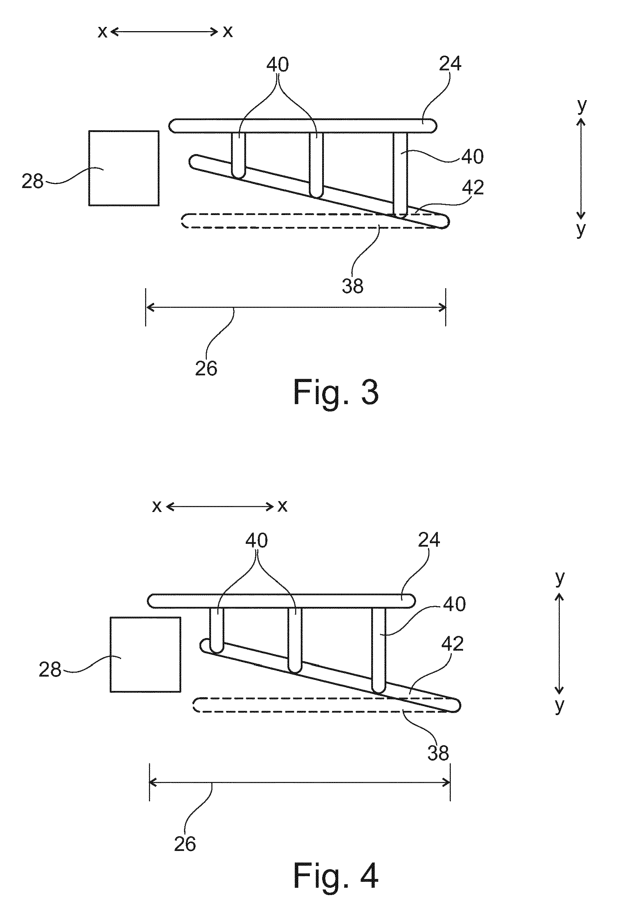

Die Figuren 3 und 4 verdeutlichen die Erfindung durch eine vereinfachte Prinzipdarstellung der Schiebetürvorrichtung 22 jeweils in einen horizontalen Schnitt von oben. Dabei zeigt Figur 3 die Schiebetür 24 in geschlossener Position, Figur 4 die Schiebetür 24 in geöffneter Position. Die erste Führungsschiene 38 zum besseren Verständnis gestrichelt eingezeichnet.

Erkennbar ist, dass das Hinterrad 28 in den Verschiebeweg 26 der Schiebetür 24 hineinragt. Die zweite Führungsschien 42 ist in horizontaler Ebene schräg verlaufend zur ersten Führungsschiene 38 angeordnet. Die Schiebetür 24 ist über mehrere, im gezeigten Ausführungsbeispiel drei in Längsrichtung bzw. entlang der Längsachse hintereinander angeordnete zweite Verbindungsmittel 40 mit der zweiten Führungsschiene 42 verbunden. Alternativ reicht auch nur ein einziges Verbindungsmittel 40 aus. Der Längenunterschied der zweiten Verbindungsmittel 40 ist derart an den schrägen Verlauf der zweiten Führungsschiene 42 angepasst, dass die untere Schließkante 30 der Schiebetür im Bereich des Verschiebeweges 26 in jeder Position parallel zur ersten Führungsschiene verläuft. Das in Öffnungsrichtung der Schiebetür 24 vorderste zweite Verbindungsmittel 40 weist die geringste Länge auf, während das in Öffnungsrichtung der Schiebetür 24 hinterste zweite Verbindungsmittel 40 die größte Länge aufweist.

Auch die Verbindung der Schiebetür 24 mit der ersten Führungsschiene kann über mehrere erste Verbindungsmittel 36 erfolgen, um der Schiebetür 24 beispielsweise eine höhere Stabilität zu verleihen.

Das in den Figuren gezeigte und beschriebene Ausführungsbeispiel soll die Erfindung nicht beschränken, es dient lediglich der Anschauung und Verdeutlichung des erfindungsgemäßen Prinzips.

Die erfindungsgemäße Fahrzeugschiebetürvorrichtung ist ausgesprochen einfach und robust konstruiert. Es werden keine zusätzlichen Bauteile benötigt, um anstelle einer rein linearen Verschiebung der Schiebetür parallel zur Karosserieaußenwand eine Verschiebung mit Schrägstellung zu erreichen. Es ist möglich, die erfindungsgemäße Fahrzeugschiebetürvorrichtung problemlos in bereits gefertigte Fahrzeuge zu integrieren, ohne wesentliche Umbauten vornehmen zu müssen. Gerade beim Nachrüsten von Fahrzeugen mit Schiebetürsystemen besteht oftmals das Problem, dass der Radkasten oder das Rad über die aus Abmessungen des Fahrzeugs seitlich vorstehen, da die Fahrzeuge ursprünglich nicht für die Verwendung mit derartigen Schiebetüren konzipiert waren. Auch ermöglicht es die Erfindung mit einfachen Mitteln, verschiedene Fahrzeugtypen auf Basis des gleichen Grundkörpers zu fertigen, da für die Verwendung der erfindungsgemäßen Fahrzeugschiebetürvorrichtung im Gegensatz zu einem anderen Ausbau des gleichen Fahrzeuggrundkörpers keine wesentlichen Umbauten gemacht werden müssen.

## Patentansprüche

1. Schiebetürvorrichtung (22), aufweisend
- eine entlang eines Verschiebeweges (26) verschiebbare Schiebetür (24),
- eine erste Führungsschiene (38),
- eine zweite Führungsschiene (42), die in vertikaler Richtung beabstandet von der ersten Führungsschiene (38) angeordnet ist,
- ein erstes Verbindungsmittel (36), das mit der Schiebetür (24) verbunden und in der ersten Führungsschiene (38) verschiebbar geführt ist,
- ein zweites Verbindungsmittel (40), das mit der Schiebetür (24) verbunden und in der zweiten Führungsschiene (42) verschiebbar geführt ist,
**dadurch gekennzeichnet, dass**
die Führungsschienen (38, 42) in horizontaler Ebene derart schräg zueinander verlaufend angeordnet sind, dass sich die Schiebetür (24) ausgehend von einer Geschlossenstellung in Richtung einer Offenstellung zunehmend schräg zu einer Vertikalen (44) stellt.

2. Schiebetürvorrichtung (22) nach einem der Ansprüche 1 bis 3, **dadurch gekennzeichnet, dass** die Schiebetür (24) in der Offenstellung ausgehend von der ersten Führungsschiene (38) einen Winkel von 0,5° bis 10°, vorzugsweise 3 bis 5°, insbesondere 1,6°, mit der Vertikalen (44) einschließt.

3. Schiebetürvorrichtung (22) nach Anspruch 1 oder Anspruch 2, **dadurch gekennzeichnet, dass** die erste Führungsschiene (38) in vertikaler Richtung entlang einer Hochachse (Z-Z) unterhalb der zweiten Führungsschiene (42) angeordnet ist, wobei in Bezug auf die Geschlossenstellung der Schiebetür (24) die erste Führungsschiene (38) in horizontaler Ebene etwa parallel und die zweite Führungsschiene (42) schräg zu der oberen Schließkante (34) der Schiebetür (24) verläuft.

4. Schiebetürvorrichtung (22) nach Anspruch 1 oder Anspruch 2, **dadurch gekennzeichnet, dass** die erste Führungsschiene (38) in vertikaler Richtung entlang einer Hochachse (Z-Z) oberhalb der zweiten Führungsschiene (42) angeordnet ist, wobei in Bezug auf die Geschlossenstellung der Schiebetür (24) die erste Führungsschiene (38) in horizontaler Ebene etwa parallel und die zweite Führungsschiene (42) schräg zu der oberen Schließkante (34) der Schiebetür (24) verläuft.

5. Schiebetürvorrichtung (22) nach Anspruch 4, **dadurch gekennzeichnet, dass** die erste Führungsschiene (38) als U-Profil ausgebildet ist, in dem eine am ersten Verbindungsmittel (36) gelagerte Rolle (46) läuft und die Schiebetür (24) hängend an der ersten Führungsschiene (38) gelagert ist.

6. Schiebetürvorrichtung (22) nach einem der Ansprüche 1 bis 5, **dadurch gekennzeichnet, dass** das die Schiebetür (24) mindestens zwei in Verschieberichtung hintereinander angeordnete zweite Verbindungsmittel (40) aufweist, die in der zweiten Führungsschiene (42) geführt sind.

7. Schiebetürvorrichtung (22) nach Anspruch 6, **dadurch gekennzeichnet, dass** die in Verschieberichtung hintereinander angeordneten zweiten Verbindungsmittel (40) unterschiedliche Längen aufweisen, wobei der Längenunterschied derart an den schrägen Verlauf der zweiten Führungsschiene (42) angepasst ist, dass die untere Schließkante (30) der Schiebetür (24) in jeder Position parallel zur ersten Führungsschiene (38) verläuft.

8. Schiebetürvorrichtung (22) nach Anspruch 7, **dadurch gekennzeichnet, dass** das in Öffnungsrichtung der Schiebetür (24) vorderste zweite Verbindungsmittel (40) die geringste Länge und das in Öffnungsrichtung der Schiebetür (24) hinterste zweite Verbindungsmittel (40) die größte Länge aufweist.
